# EUROPEAN PATENT SPECIFICATION

(11) **EP 1 856 839 B1**
(45) Date of publication and mention of the grant of the patent: **11.04.2012**
(21) Application number: 06734528.0
(22) Date of filing: 08.02.2006
(51) Int. Cl.: H04L 12/18

(54) **IP MULTICAST STREAMING DATA ERROR CORRECTION**
FEHLERKORREKTUR FÜR IP-MULTICAST-STREAMING-DATEN
CORRECTION D'ERREURS DE DONNEES TRANSMISES EN CONTINU DURANT UNE MULTIDIFFUSION IP

(30) Priority: 07.03.2005 US 74381
(43) Date of publication of application: 21.11.2007
(73) Proprietor: The Boeing Company, Chicago, IL 60606 (US)
(72) Inventor: YANG, Yifan, Seattle, Washington 98108 (US); MCDONOUGH, Robert, Kent, Washington 98042 (US)
(74) Representative: Howson, Richard G.B.
(86) International application number: PCT/US2006/004322
(87) International publication number: WO 2006/096274

(56) References cited:
- JP-A- 2006 033 564
- US-A1- 2002 170 060
- LINDER H ET AL: "A forward error correction based multicast transport protocol for multimedia applications in satellite environments" PERFORMANCE, COMPUTING, AND COMMUNICATIONS CONFERENCE, 1997. IPCCC 1997., IEEE INTERNATIONAL PHOENIX, TEMPE, AZ, USA 5-7 FEB. 1997, NEW YORK, NY, USA,IEEE, US, 5 February 1997 (1997-02-05), pages 419-425, XP010217019 ISBN: 0-7803-3873-1
- RMT WG M LUBY/DIGITAL FOUNTAIN L VICISANO/CISCO J GEMMELL/MICROSOFT L RIZZO/ACIRI AND UNIV PISA M HANDLEY/ACIRI J CROWCROFT/UCL: "The Use of Forward Error Correction in Reliable Multicast; draft-ietf-rmt-info-fec-03.txt;" IETF STANDARD-WORKING-DRAFT, INTERNET ENGINEERING TASK FORCE, IETF, CH, vol. rmt, no. 3, 3 September 2002 (2002-09-03), XP015026571 ISSN: 0000-0004

## Description

### FIELD OF INVENTION

The invention relates generally to the communication of streaming data to a mobile platform and more particularly to correcting data loss errors that occur during wireless transmission of Internet Protocol (IP) multicast data streams.

### BACKGROUND OF THE INVENTION

The transmission of reliable multicast data over wireless channels is typically unreliable due to data losses during the transmission. Conversely, unicast wireless transmissions, e.g. TCP transactions, for such things as 'surfing' the Internet and e-mail transmissions are generally more reliable because unicast transmissions are acknowledged transmissions. That is, when a packet of data is sent, via unicast transmissions, an acknowledgement is returned indicated whether or not the data packet was received. Thus, if a data packet is not received, the acknowledgement indicates so and the data packet is resent to correct the error. However, multicast data transmissions do not include an acknowledgement and have no embedded correction mechanism. Thus, if any bit errors occur in a packet, the entire packet can be corrupted and lost, the sender will be unaware of the lost data, and the target receives streaming data that is missing data. For example, packets in a multicast audio or video stream, are quite large, e.g. 1500 bytes, thus, losing one packet can result in 'choppy' streaming, 'freeze frames' or gaps in the audio or video.

The occurrence of data loss can be amplified when the wireless multicast streaming data is transmitted within a closed environment such as a mobile platform, e.g. an aircraft, train, bus or ship. The characteristics of wireless multicast transmissions within a mobile platform are such that the electromagnetic waves can propagate through the interior of the mobile platform and cause destructive interference with each other. Even further losses can occur within a closed environment due to hardware characteristic of the devices receiving the multicast signals, e.g. laptop computers. The wireless cards or antennas of the receiving devices can be very inefficient and cause considerable packet loss. Additionally, typically the error correction software accompanying such devices provide only a low level, inefficient correction scheme. US2002/0170060 discloses methods and apparatus for transmitting portal content over multiple transmission regions. Within each of the coverage regions, data content selected for the region is multicast to platforms via an associated ground station and satellite. Each platform includes a mobile communications system configured for bidirectional communication with a ground segment via satellite link. Linder H et al (ISBN 0-7803-3873-1) "A forward error correction based multicast transport protocol for multimedia applications in satellite environments" discloses performance experiments in a simulated satellite environment to demonstrate the error correction capabilities of the proposed forward error connection concept. In order to control transmission errors on a satellite channel, a generic concept for transport layer based forward error correction is proposed and implemented.

Therefore, it would be desirable to wirelessly multicast streaming data, e.g. live news, sports, etc., within a closed environment, such as a mobile platform, efficiently and with error correction to correct for data loss.

### BRIEF SUMMARY OF THE INVENTION

[0004a] According to one aspect of the invention there is provided a method for providing IP multicast stream data to a passenger of a means of transport as claimed in claim 1. According to another aspect of the present invention there is provided a system for providing IP multicast streaming data to a passenger of a means of transport as claimed in claim 3.

In a preferred embodiment of the present invention, a method for multicasting Internet Protocol (IP) streaming data to a mobile platform passenger is provided. The method includes receiving data content at a base station network from a content provider. The received data is formatted at the base station into an IP multicast data stream and communicated to a mobile platform communications system onboard a mobile platform. The mobile platform communications system includes a local area network (LAN) used to distribute the IP multicast data stream to at least one mobile platform client interface, e.g. a laptop computer. The data content of the IP multicast data stream is then displayed on the mobile platform client interface for viewing by a mobile platform passenger or crew member. Additionally, the method includes applying forward error correction (FEC) to the IP multicast data stream to correct for data losses, prior to distributing the IP Multicast data stream to the mobile platform client interface. The method further includes decoding the FEC encoded IP multicast data stream so that the corrected data content can be interpreted and displayed on the mobile platform client interface.

Further areas of applicability of the present invention will become apparent from the detailed description provided hereinafter. It should be understood that the detailed description and specific examples, while indicating the preferred embodiments of the invention, are intended for purposes of illustration only and are not intended to limit the scope of the invention. Furthermore, the features, functions, and advantages of the present invention can be achieved independently in various embodiments of the present inventions or may be combined in yet other embodiments.

### BRIEF DESCRIPTION OF THE DRAWINGS

The present invention will become more fully understood from the detailed description and accompanying drawings, wherein;

Figure 1 is a general schematic illustrating a Internet protocol multicast communication system that implements forward error correction, in accordance with the present invention;

Figure 2 is a general schematic illustrating an onboard communications system shown in Figure 1;

Figure 3 is a general schematic illustrating a base station shown in Figure 1;

Figure 4 is a general schematic illustrating one preferred alternate embodiment of the onboard communications system shown in Figure 2;

Figure 5 is a general schematic illustrating one preferred alternate embodiment of the base station shown in Figure 3; and

Figure 6 is a flow chart illustrating a method of operation of the Internet protocol multicast communication system, shown in Figure 1.

Corresponding reference numerals indicate corresponding parts throughout the several views of drawings.

### DETAILED DESCRIPTION OF THE INVENTION

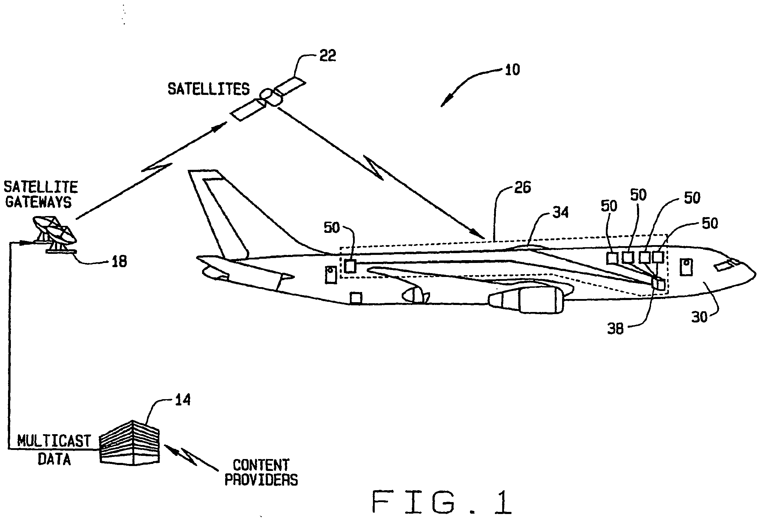

Figure 1 is a general schematic illustrating an Internet Protocol multicast communication system (IPMCS) 10 that implements forward error correction (FEC), in accordance with preferred embodiments of the present invention. The IPMCS 10 includes at least one base station 14, at least one satellite gateway 18, at least one satellite 22 and a mobile platform communications system 26, e.g. a local area network (LAN), onboard a mobile platform 30. In a preferred embodiment, the mobile platform communications system 26 is a wireless LAN. Although the mobile platform 30 is illustrated in Figure 1 as an aircraft, it should be understood that the mobile platform 30 could be any mobile platform that includes an onboard communication system 26, for example, land vehicles such as a bus, a train or an automobile, and maritime vehicles, such as a cruise ship.

Generally, the base station 14 receives streaming data from a content provider that can be any multimedia source adapted to provide information and/or entertainment data. For example, the content provider can be any multimedia source that provides such things as news, sports, music, movies, stock market information, Internet access and other types of information or entertainment data. The base station 14 formats the data from the content provider into an internet protocol (IP) multicast data stream that is communicated to the satellite gateway 18.

A multicast data stream is a non-acknowledgement transaction, as opposed to a unicast data stream which sends an acknowledgement back indicating whether an end user device received all the data intact. Thus, if data bits or data packets are not received by the end user device, the device will not know there is missing or lost data and improperly or incompletely interpret and/or display the data content. Generally, multicast is more efficient than unicast in distributing the same data to multiple recipients. Unicast send data as many times as there are recipients, whereas multicast will distribute the data to all recipients in a single transmission. Wireless communications such as communications to a mobile platform is typically restricted to low bandwidth, for example 5 to 10 megabits that would only support a few, e.g. six or seven, end user devices using unicast scheme. Thus, communications to and/or within mobile platforms generally incorporate multicast to efficiently transmit data to multiple recipients.

The IP multicast data stream can be communicated between the base station 14 and the satellite gateway 18 using any suitable wired or wireless communication means. The IP multicast data stream is communicated from the satellite gateway 18 to the satellite 22 and then to the onboard communications system 26, particularly to an antenna 34 included in the onboard communications system 26. The antenna 34 is communicatively connected to a receive/distribute subsystem 38 of the onboard communications system 26.

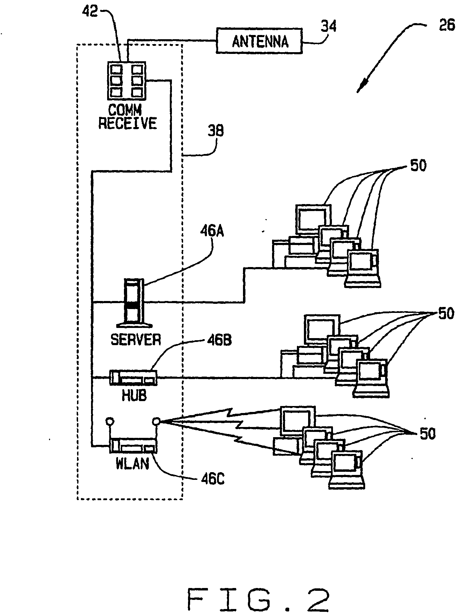

Referring to Figure 2, the onboard communications system 26 includes a communications receiving component 42 that receives the IP multicast data stream from the antenna 34. The communications receiving component 42 then communicates the IP multicast data stream to a distribution component 46, which can be any suitable network distribution device such as a server 46A, a network hub 46B or a wireless local area network (WLAN) 46C. The distribution component 46 distributes at least the content of the IP multicast data stream to one or more mobile platform client interfaces 50, as described in further detail below. In one preferred embodiment the communication between the distribution component 46 and the client interface 50 is wireless communication. The client interface 50 can be any computer based device suitable for receiving at least the data content from the distribution component 46 and displaying the data content to be viewed by a passenger or crew member of the mobile platform. For example, the client interface 50 can be a computer based input/output device install onboard the mobile platform in crew quarters accessible by crew members or in a passenger cabin accessible by passengers of the mobile platform. Or, the client interface 50 can be a portable laptop computer, personal data assistant (PDA), cell phone or other portable computer based communication device carried onto the mobile platform or distributed onboard the mobile platform and communicatively connected to the distribution device 46.

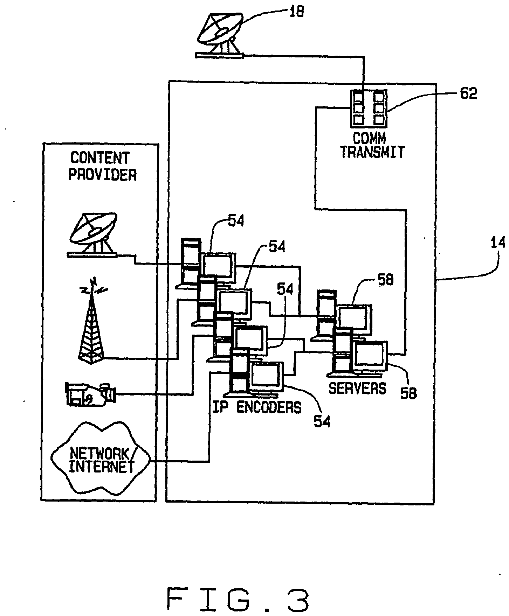

Referring now to Figure 3, the base station 14 includes at least one IP encoder 54 that receives the streaming data from the content provider and formats, i.e. encodes, the data into IP data. As described above, the content provider can be any multimedia source adapted to provide information and/or entertainment data. For example, the content provider can be a satellite gateway, a terrestrial communications system, the Internet, stored media or a direct input/output device such as a video camera. The IP encoder 54 formats the data from the content provider into IP data and generates an IP multicast data stream that is communicated to at least one base station server 58. The base station server 58 communicates the IP multicast data stream to a communication transmission component 62 that, in turn, communicates the IP multicast data stream to the satellite gateway 18.

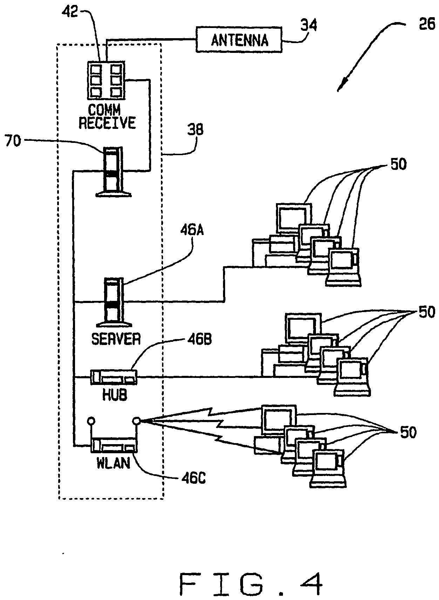

Referring now to Figures 3 and 4, in one preferred embodiment of the present invention, the mobile platform receive/distribute subsystem 38 includes a FEC processing component 70. The FEC processing component 70 is configured to encode the IP multicast data stream received from mobile platform communications receiving component 42 with FEC. The FEC processing component 70 encodes the IP multicast data stream using FEC to correct for lost data bits or packets. Generally, FEC constructs mathematical formulas used to recover lost data and may add information to the original data stream, e.g. protection packets, and/or remap the original data stream to a new data stream to increase the likelihood of reconstructing the original data stream. The FEC processing component 70 can be either a software component or an independent device of the receive/distribute subsystem 38 and can implement any suitable form of FEC known in the art that can be configured relative to the mobile platform in which it is implemented, e.g. Reed-Solomon type coding.

In one implementation of this embodiment, the FEC processing component 70 encodes the IP multicast data stream and communicates the FEC encoded IP multicast data stream to the mobile platform server 46A, which in turn, communicates the FEC encoded IP multicast data stream to the client interface 50, via either wired or wireless connections. The client interface 50 includes IP and FEC decoding software adapted to decode the IP format and the FEC of the FEC encoded IP multicast data stream so that the decoded data content can be displayed and viewed by either a passenger or crew member.

Still referring to Figures 3 and 4, in another preferred embodiment, the FEC processing component 70 encodes the IP multicast data stream and communicates the FEC encoded IP multicast data stream to the mobile platform hub 46B, via wired or wireless connections. The mobile platform hub 46B communicates the FEC encoded IP multicast data stream to the client interface 50, via either wired or wireless connections. The client interface utilizes IP and FEC decoding software to decode the IP format and the FEC of the FEC encoded IP multicast data stream and display the decoded data content to be viewed by either a passenger or crew member.

Still referring to Figures 3 and 4, in yet another preferred embodiment, the FEC processing component 70 encodes the IP multicast data stream and communicates the FEC encoded IP multicast data stream to the mobile platform WLAN 46C, via wired or wireless connections. The mobile platform WLAN 46C wirelessly communicates the FEC encoded IP multicast data stream to the client interface 50. The client interface utilizes IP and FEC decoding software to decode the IP format and the FEC of the FEC encoded IP multicast data stream and display the decoded data content to be viewed by either a passenger or crew member.

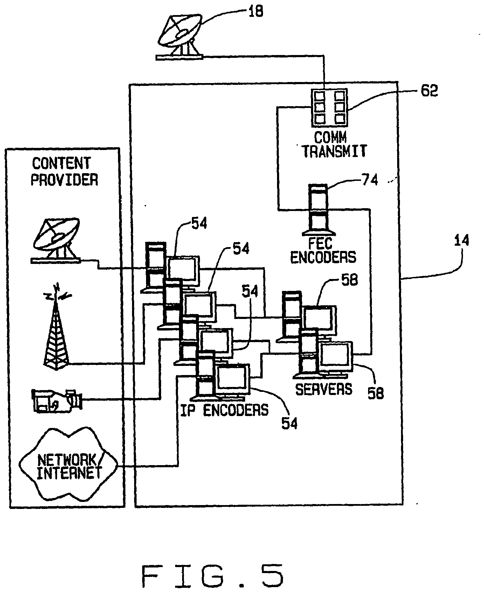

Referring to Figure 5, in one embodiment the base station 14 includes a forward error correction (FEC) encoder 74 that receives the IP multicast data stream from the base station server 58. The base station FEC encoder 74 encodes the IP multicast data stream using FEC to correct for lost data bits or packets. Generally, FEC constructs mathematical formulas used to recover lost data and may add information to the original data stream, e.g. protection packets, and/or remap the original data stream to a new data stream to increase the likelihood of reconstructing the original data stream. The FEC encoder 74 can be either a software component or an independent device of the base station 14 and can implement any suitable form of FEC known in the art that can be configured relative to the mobile platform in which it is implemented, e.g. Reed-Solomon FEC.

The FEC encoder 74 then communicates the FEC encoded IP multicast data stream to the communications transmission component 62 that, in turn communicates the FEC encoded IP multicast data stream to the satellite gateway 18 and subsequently to the mobile platform communications receiving component 42, via the satellite 22 and the mobile platform antenna 34.

Referring to Figures 2 and 5, in one preferred embodiment the communications receiving component 42 communicates the FEC encoded IP multicast data stream, via either wired or wireless connections, to the mobile platform server 46A. In one implementation of this embodiment, the mobile platform server 46A communicates the FEC encoded IP multicast data stream to the client interface 50, via either wired or wireless connections. The client interface 50 includes IP and FEC decoding software adapted to decode the IP format and the FEC of the FEC encoded IP multicast data stream so that the decoded data content can be displayed and viewed by either a passenger or crew member.

Still referring to Figures 2 and 5, in another preferred embodiment the communications receiving component 42 communicates the FEC encoded IP multicast data stream, via either wired or wireless connections, to the mobile platform hub 46B. The mobile platform hub 46B communicates the FEC encoded IP multicast data stream, via either wired or wireless connections, to the client interface 50 that includes IP and FEC decoding software. Thus, the client interface 50 decodes the IP format and the FEC of the FEC encoded IP multicast data stream and displays the decoded data content to be viewed by either a passenger or crew member.

Still further referring to Figures 2 and 5, in yet another preferred embodiment the communications receiving component 42 communicates the FEC encoded IP multicast data stream, via either wired or wireless connections, to the mobile platform WLAN 46C. The mobile platform WLAN 46C wirelessly communicates the FEC encoded IP multicast data stream to the client interface 50 that includes IP and FEC decoding software. Thus, the client interface 50 decodes the IP format and the FEC of the FEC encoded IP multicast data stream and displays the decoded data content to be viewed by either a passenger or crew member.

Referring now to Figures 4 and 5, in one preferred personification of the present invention, the FEC processing component 70 is configured to FEC decode the FEC encoded IP multicast data stream, and/or the FEC processing component 70 can be configured to FEC decode and then re-encode the IP multicast data stream with FEC. Thus, in one embodiment, the FEC processing component 70 receives the FEC encoded IP multicast data stream from the mobile platform communications receiving component 42 and communicates with the mobile platform server 46A, via wired or wireless connections. In one implementation of this embodiment the FEC processing unit decodes the FEC of the FEC encoded IP multicast data stream and communicates the IP multicast data stream to the mobile platform server 46A. The mobile platform server 46A decodes the IP multicast data stream and communicates a data stream in a format that can be understood by the client interface 50, via either wired or wireless connections. The client interface 50 then displays the data content of the multicast data stream to be viewed by either a passenger or crew member.

In another implementation of this embodiment, the FEC processing component 70 decodes the FEC of the FEC encoded IP multicast data stream and communicates the IP multicast data stream to the mobile platform server 46A, which in turn, communicates the IP multicast data stream to the client interface 50, via either wired or wireless connections. The client interface 50 includes IP decoding software adapted to decode the IP of the IP multicast data stream so that the decoded data content can be displayed and viewed by either a passenger or crew member.

In yet another implementation of this embodiment, the FEC processing component 70 decodes the FEC, then re-encodes the IP multicast data stream with FEC and communicates the FEC re-encoded IP multicast data stream, via wired or wireless connections, to the mobile platform server 46A. The mobile platform server 46A communicates the FEC re-encoded IP multicast data stream to the client interface 50, via either wired or wireless connections. The client interface 50 includes IP and FEC decoding software adapted to decode the IP format and the FEC of the FEC re-encoded IP multicast data stream so that the decoded data content can be displayed and viewed by either a passenger or crew member.

In still yet another implementation of this embodiment, the FEC processing component 70 adds a second layer of FEC to the existing FEC encoded IP multicast stream, creating a cumulative FEC protected stream. The FEC processing component 70 then communicates the cumulative FEC encoded IP multicast data stream, via wired or wireless connections, to the mobile platform server 46A. The mobile platform server 46A communicates the FEC re-encoded IP multicast data stream to the client interface 50, via either wired or wireless connections. The client interface 50 includes IP and FEC decoding software adapted to decode the IP format and the FEC of the cumulative FEC encoded IP multicast data stream so that the decoded data content can be displayed and viewed by either a passenger or crew member.

Still referring to Figures 4 and 5, in another preferred embodiment, the FEC processing component 70 receives the FEC encoded IP multicast data stream from the mobile platform communications receiving component 42 and communicates with the mobile platform hub 46B, via wired or wireless connections. In one implementation of the present embodiment, the FEC processing unit decodes the FEC of the FEC encoded IP multicast data stream and communicates the IP multicast data stream to the mobile platform hub 46B. The mobile platform hub 46B communicates the IP multicast data stream to the client interface 50, via either wired or wireless connections. The client interface 50 includes IP decoding software adapted to decode the IP of the IP multicast data stream so that the decoded data content can be displayed and viewed by either a passenger or crew member.

In another implementation of the this embodiment, the FEC processing component 70, decodes the FEC, then re-encodes the IP multicast data stream with FEC and communicates a FEC re-encoded IP multicast data stream, via wired or wireless connections, to the mobile platform hub 46B. The mobile platform hub 46B communicates the FEC re-encoded IP multicast data stream, via either wired or wireless connections, to the client interface 50 that includes IP and FEC decoding software. Thus, the client interface 50 decodes the IP format and the FEC of the FEC re-encoded IP multicast data stream and displays the decoded data content to be viewed by either a passenger or crew member.

In yet another implementation of this embodiment, the FEC processing component 70 adds a second layer of FEC to the existing FEC encoded IP multicast stream, creating a cumulative FEC protected stream. The FEC processing component 70 then communicates the cumulative FEC encoded IP multicast data stream, via wired or wireless connections, to the mobile platform hub 46B. The mobile platform hub 46B communicates the FEC re-encoded IP multicast data stream to the client interface 50, via either wired or wireless connections. The client interface 50 includes IP and FEC decoding software adapted to decode the IP format and the FEC of the cumulative FEC encoded IP multicast data stream so that the decoded data content can be displayed and viewed by either a passenger or crew member.

Still referring to Figures 4 and 5, in yet another preferred embodiment, the FEC processing component 70 receives the FEC encoded IP multicast data stream from the mobile platform communications receiving component 42 and communicates with the mobile platform WLAN 46C, via wired or wireless connections. In one implementation of the present embodiment, the FEC processing unit decodes the FEC of the FEC encoded IP multicast data stream and communicates the IP multicast data stream to the mobile platform WLAN 46C. The mobile platform WLAN 46C wirelessly communicates the IP multicast data stream to the client interface 50. The client interface 50 includes IP decoding software adapted to decode the IP of the IP multicast data stream so that the decoded data content can be displayed and viewed by either a passenger or crew member.

In another implementation of the this embodiment, the FEC processing component 70, decodes the FEC, then re-encodes the IP multicast data stream with FEC and communicates a FEC re-encoded IP multicast data stream, via wired or wireless connections, to the mobile platform WLAN 46C. The mobile platform WLAN 46C wirelessly communicates the FEC re-encoded IP multicast data stream to the client interface 50 that includes IP and FEC decoding software. Thus, the client interface 50 decodes the IP format and the FEC of the FEC re-encoded IP multicast data stream and displays the decoded data content to be viewed by either a passenger or crew member.

In yet another implementation of this embodiment, the FEC processing component 70 adds a second layer of FEC to the existing FEC encoded IP multicast stream, creating a cumulative FEC protected stream. The FEC processing component 70 then communicates the cumulative FEC encoded IP multicast data stream, via wired or wireless connections, to the mobile platform WLAN 46C. The mobile platform WLAN 46C wirelessly communicates the FEC re-encoded IP multicast data stream to the client interface 50 that includes IP and FEC decoding software adapted to decode the IP format and the FEC of the cumulative FEC encoded IP multicast data stream so that the decoded data content can be displayed and viewed by either a passenger or crew member.

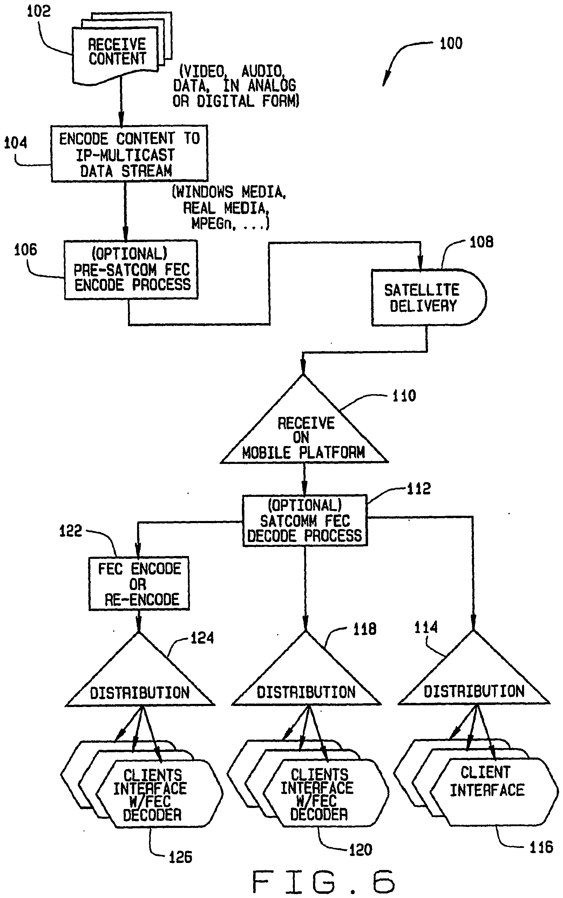

Figure 6 is a flow chart 100 illustrating a method of operation of the IPMCS 10, shown in Figure 1. The base station 14 receives streaming data from a content provider that can be any multimedia source adapted to provide information and/or entertainment data, as illustrate at 102. The base station 14 formats the data from the content provider into an IP multicast data stream, as indicated at 104. The IP multicast data stream can be communicated to the satellite gateway 18 or be encoded with FEC, via the base station FEC encoder 74 and then communicated to the satellite gateway 18, as indicated at 106. The IP multicast data stream or the FEC encoded IP multicast data stream is then communicated to the mobile platform communications system 26, via satellite 22, as indicated at 108 and 110. If the mobile platform communications system 26 receives an FEC encoded IP multicast data stream, the FEC encoded IP multicast data stream can optionally be FEC decoded utilizing the FEC processing component 70, as indicated at 112. The decoded IP multicast data stream is distributed to the client interface 50 and displayed, in accordance with the various embodiments described above, as indicated at 114 and 116. Alternatively, the FEC encoded IP multicast data stream is not FEC decoded by FEC processing module 38, but is distributed to the client interface 50. The client interface decodes the FEC encoded IP multicast data stream and displays the data content, in accordance with the various embodiments described above, as indicated at 118 and 120.

If the mobile platform communications system 26 receives an IP multicast data stream that has not been encoded with FEC, the IP multicast data stream is encoded with FEC utilizing the FEC processing component 70, as indicated at 122. Alternatively, if the mobile platform communications system 26 receives an FEC encoded IP multicast data stream and the FEC encoded IP multicast data stream is FEC decoded at 112, the decoded IP multicast data stream can be re-encoded with FEC utilizing the FEC processing component 70, as also indicated at 122. If the FEC encoded IP multicast data stream is not FEC decoded at 112, the FEC processing component 70 can apply further FEC encoding to the FEC encoded IP multicast data stream to create a cumulative FEC encoded IP multicast data stream. The FEC encoded, cumulative encoded, or re-encoded IP multicast data stream is distributed to the client interface 50, where the client interface decodes the FEC encoded IP multicast data stream and displays the data content, in accordance with the various embodiments described above, as indicated at 124 and 126.

While the invention has been described in terms of various specific embodiments, those skilled in the art will recognize that the invention can be practiced with modification within the scope of the appended claims.

## Claims

1. A method (100) for providing Internet Protocol "IP" multicast streaming data to a passenger of a means of transport, said method **characterized by** comprising:
applying forward error correction "FEC" to an "IP" multicast data stream at a base station (14) prior to the IP multicast data stream being communicated to the means of transport via satellite;
encoding (122) the IP multicast data stream using FEC at the means of transport (30) prior to distributing the IP multicast data stream throughout the means of transport via a local area network "LAN" (46) wherein the IP multicast data stream is FEC encoded twice to generate a cumulative FEC encoded IP Multicast data stream; and
decoding (126) the cumulative FEC encoded IP multicast data stream prior to viewing of content contained in the IP multicast data stream on a computer based communication device (50) associated with said means of transport.

2. The method of Claim 1, wherein encoding the IP multicast data stream using FEC comprises:
receiving (110) the IP multicast data stream at the means of transport;
applying (122) FEC to the IP multicast data stream at the means of transport; and
distributing (126) the FEC encoded IP multicast data stream to the computer based communication device.

3. A system (10) for providing Internet Protocol "IP" multicast streaming data to a passenger of a means of transport, said system comprising:
a base station network (14) adapted to receive (102) data content and generate (104) an "IP" multicast data stream in response thereto; the system **characterized in that**:
the base station network includes a base station FEC encoder (74) such that the IP multicast data stream is FEC encoded by the base station network and communicated via satellite to a means of transport communication system (26); and wherein
the means of transport communications system comprises a local area network "LAN" adapted to receive the IP multicast data stream from the base station network and distribute the IP multicast data stream throughout the means of transport, via the LAN; the system further comprising
at least one computer based communication device (50) adapted to receive the IP multicast data stream distributed by the LAN;
at least one forward error correction "FEC" encoder (70) at the means of transport adapted to encode the IP multicast data stream using FEC prior to the IP multicast data stream being distributed by the LAN of the means of transport communications system; wherein the IP multicast data stream is FEC-encoded twice to generate a cumulative FEC encoded IP multicast data stream; and
at least one FEC decoder adapted to decode the cumulative FEC encoded IP multicast data stream prior to viewing of content contained in the IP multicast data stream on a computer based communication device associated with said means of transport.

4. The system of Claim 3, wherein the base station network is further adapted to digitize visual data content received from a content provider; and filter the visual data to de-interlace the visual data and remove artifacts and noise.

5. The system of Claim 3, wherein the computer based communication device includes one of the at least one FEC decoder such that the FEC encoded IP multicast data stream is decoded after being distributed to the computer based communication device.

6. A method for providing IP multicast streaming data to a passenger of a means of transport as claimed in claim 1, said method further comprising:
receiving data content at a base station network (14);
formatting the data content received to an IP multicast data stream;
encoding (122) the IP multicast data stream using a FEC encoder included in the base station network;
communicating (108) the base station-network-FEC-encoded IP multicast data stream to a means of transport communications system (26) including a LAN (46);
distributing the IP multicast data stream to at least one computer based communication device (50) using the LAN; and
displaying the data content of the IP multicast data stream on the computer based communication device;

7. The method of Claim 6, wherein encoding the FEC, comprises:
receiving the IP multicast data stream at the means of transport communication system (26);
applying FEC to the IP multicast data stream using a FEC encoder (54) included in the means of transport communications system; and
distributing the FEC encoded IP multicast data stream to the computer based communication device.

8. The method of Claim 7, wherein decoding the cumulative FEC encoded IP multicast data stream comprises:
receiving the FEC encoded IP multicast data stream at the computer based communication device (50); and
decoding (126) the FEC encoded IP multicast data stream at the computer based communication device using a decoder included in the computer based communication device.

9. The method of Claim 6, wherein distributing the IP multicast data stream to at least one computer based communication device (50) comprises wirelessly distributing the IP multicast data stream to the computer based communication device via a wireless means of transport LAN (46).

## Patentansprüche

1. Verfahren (100) zum Liefern von Internet Protocol "IP" Multicast Stream-Daten an einen Passagier eines Transportmittels, wobei das Verfahren **dadurch gekennzeichnet ist, dass** es umfasst:
Anwenden einer Vorwärtsfehlerkorrektur (Forward Error Correction; "FEC") auf einen "IP" Multicast Datenstrom an einer Basisstation (14), bevor der IP Multicast Datenstrom über Satellit an das Transportmittel kommuniziert wird;
Codieren (122) des IP Multicast Datenstroms mittels FEC an dem Transportmittel (30) vor dem Verteilen des IP Multicast Datenstroms in dem gesamten Transportmittel über ein lokales Netzwerk (Local Area Network; "LAN") (46), wobei der IP Multicast Datenstrom zwei Mal FEC-codiert wird, um einen kumulativen FEC-codierten IP Multicast Datenstrom zu erzeugen; und
Decodieren (126) des kumulativen FEC-codierten IP Multicast Datenstroms vor dem Betrachten von in dem IP Multicast Datenstrom enthaltenem Inhalt auf einem computerbasierten Kommunikationsgerät (50), das mit dem Transportmittel verbunden ist.

2. Verfahren nach Anspruch 1, wobei das Codieren des IP Multicast Datenstroms mittels FEC umfasst:
Empfangen (110) des IP Multicast Datenstroms an dem Transportmittel;
Anwenden (122) von FEC auf den IP Multicast Datenstrom an dem Transportmittel; und
Verteilen (126) des FEC-codierten IP Multicast Datenstroms an das computerbasierte Kommunikationsgerät.

3. System (10) zum Liefern von Internet Protocol "IP" Multicast Stream-Daten an einen Passagier eines Transportmittels, wobei das System aufweist:
ein Basisstations-Netzwerk (14), das ausgelegt ist, um Dateninhalt zu empfangen (102) und im Ansprechen darauf einen "IP" Multicast Datenstrom zu erzeugen (104), wobei das System **dadurch gekennzeichnet ist, dass**:
das Basisstations-Netzwerk einen Basisstations-FEC-Codierer (74) aufweist, so dass der IP Multicast Datenstrom von dem Basisstations-Netzwerk codiert und über Satellit an ein Transportmittel-Kommunikations-System (26) kommuniziert wird; und wobei
das Transportmittel-Kommunikations-System ein lokales Netzwerk (Local Area Network; "LAN") aufweist, das ausgelegt ist, um den IP Multicast Datenstrom vom Basisstations-Netzwerk zu empfangen und den IP Multicast Datenstrom im gesamten Transportmittel über das lokale Netzwerk zu verteilen; wobei das System des Weiteren aufweist:
wenigstens ein computerbasiertes Kommunikationsgerät (50), das ausgelegt ist, um den von dem lokalen Netzwerk verteilten IP Multicast Datenstrom zu empfangen;
wenigstens einen Vorwärtsfehlerkorrektur (Forward Error Correction; FEC) -Codierer (70) an dem Transportmittel, der ausgelegt ist, um den IP Multicast Datenstrom mittels FEC zu codieren, bevor der IP Multicast Datenstrom von dem lokalen Netzwerk des Transportmittel-Kommunikations-Systems verteilt wird; wobei der IP Multicast Datenstrom zwei Mal FEC-codiert wird, um einen kumulativen FEC-codierten IP Multicast Datenstrom zu erzeugen; und
wenigstens einen FEC-Decodierer, der ausgelegt ist, um den kumulativen FEC-codierten IP Multicast Datenstrom zu decodieren, bevor der in dem IP Multicast Datenstrom enthaltene Inhalt auf einem computerbasierten Kommunikationsgerät, das mit dem Transportmittel verbunden ist, betrachtet wird.

4. System nach Anspruch 3, wobei das Basisstations-Netzwerk des Weiteren ausgelegt ist, um visuellen Dateninhalt, der von einem Inhaltsanbieter empfangen wird, zu digitalisieren, und um die visuellen Daten zu filtern, um die visuellen Daten zu entflechten und Bildfehler und Rauschen zu beseitigen.

5. System nach Anspruch 3, wobei das computerbasierte Kommunikationsgerät einen des wenigstens einen FEC-Decodierers aufweist, so dass der FEC-codierte IP Multicast Datenstrom decodiert wird, nachdem er an das computerbasierte Kommunikationsgerät verteilt worden ist.

6. Verfahren zum Liefern von IP Multicast Stream-Daten an einen Passagier eines Transportmittels gemäß Anspruch 1, wobei das Verfahren des Weiteren umfasst:
Empfangen von Dateninhalt an einem Basisstations-Netzwerk (14);
Formatieren des empfangenen Dateninhalts zu einem IP Multicast Datenstrom;
Codieren (122) des IP Multicast Datenstroms mittels eines FEC-Codierers, der in dem Basisstations-Netzwerk enthalten ist;
Kommunizieren (108) des Basisstations-Netzwerk-FEC-codierten IP Multicast Datenstroms an ein Transportmittel-Kommunikations-System (26) mit einem lokalen Netzwerk (46);
Verteilen des IP Multicast Datenstroms an wenigstens ein computerbasiertes Kommunikationsgerät (50) mittels des lokalen Netzwerks; und
Anzeigen des Dateninhalts des IP Multicast Datenstroms auf dem computerbasierten Kommunikationsgerät.

7. Verfahren nach Anspruch 6, wobei das Codieren des FEC umfasst:
Empfangen des IP Multicast Datenstroms an dem Transportmittel-Kommunikations-System (26);
Anwenden von FEC auf den IP Multicast Datenstrom mittels eines FEC-Codierers (54), der in dem Transportmittel-Kommunikations-System enthalten ist; und
Verteilen des FEC-codierten IP Multicast Datenstroms an das computerbasierte Kommunikationsgerät.

8. Verfahren nach Anspruch 7, wobei das Decodieren des kumulativen FEC-codierten IP Multicast Datenstroms umfasst:
Empfangen des FEC-codierten IP Multicast Datenstroms an dem computerbasierten Kommunikationsgerät (50); und
Decodieren (126) des FEC-codierten IP Multicast Datenstroms an dem computerbasierten Kommunikationsgerät mittels eines Decoders, der in dem computerbasierten Kommunikationsgerät enthalten ist.

9. Verfahren nach Anspruch 6, wobei das Verteilen des IP Multicast Datenstroms an wenigstens ein computerbasiertes Kommunikationsgerät (50) das drahtlose Verteilen des IP Multicast Datenstroms an das computerbasierte Kommunikationsgerät über ein drahtloses lokales Transportmittel-Netzwerk (46) umfasst.

## Revendications

1. Procédé (100) destiné à fournir des données transmises en continu durant une multidiffusion de protocole Internet « IP » à un passager d'un moyen de transport, ledit procédé étant **caractérisé en ce qu'**il comprend les étapes consistant à :
appliquer une correction d'erreurs sans voie de retour « FEC » à un flux de données multidiffusion « IP » au niveau d'une station de base (14) avant la communication du flux de données multidiffusion IP au moyen de transport par satellite ;
coder (122) le flux de données multidiffusion IP en utilisant FEC au niveau du moyen de transport (30) avant la distribution du flux de données multidiffusion IP dans tout le moyen de transport par le biais d'un réseau local « LAN » (46) dans lequel le flux de données multidiffusion IP est codé FEC deux fois pour générer un flux de données multidiffusion IP codé FEC cumulatif ; et
décoder (126) le flux de données multidiffusion IP codé FEC cumulatif avant la visualisation du contenu contenu dans le flux de données multidiffusion IP sur un dispositif de communication informatique (50) associé audit moyen de transport.

2. Procédé selon la revendication 1, dans lequel le codage du flux de données multidiffusion IP en utilisant FEC comprend les étapes consistant à :
recevoir (110) le flux de données multidiffusion IP au niveau du moyen de transport ;
appliquer (122) FEC au flux de données multidiffusion IP au niveau du moyen de transport ; et
distribuer (126) le flux de données multidiffusion IP codé FEC à un dispositif de communication informatique.

3. Système (10) destiné à fournir des données transmises en continu durant une multidiffusion de protocole Internet « IP » à un passager d'un moyen de transport, ledit système comprenant :
un réseau de stations de base (14) conçu pour recevoir (102) le contenu de données et générer (104) un flux de données multidiffusion « IP » en réponse ; le système étant **caractérisé en ce que** :
le réseau de stations de base comprend un codeur FEC de station de base (74) de sorte que le flux de données multidiffusion IP est codé FEC par le réseau de stations de base et communiqué par satellite à un système de communication du moyen de transport (26) ; et dans lequel
le système de communication du moyen de transport comprend un réseau local « LAN » conçu pour recevoir le flux de données multidiffusion IP à partir du réseau de stations de base et distribuer le flux de données multidiffusion IP dans tout le moyen de transport, via le LAN ; le système comprenant en outre
au moins un dispositif de communication informatique (50) conçu pour recevoir le flux de données multidiffusion IP distribué par le LAN ;
au moins un codeur de correction d'erreurs sans voie de retour « FEC » (70) au niveau du moyen de transport conçu pour coder le flux de données multidiffusion IP en utilisant FEC avant la distribution du flux de données multidiffusion IP par le LAN du système de communication du moyen de transport ; dans lequel le flux de données multidiffusion IP est codé FEC deux fois pour générer un flux de données multidiffusion IP codé FEC cumulatif ; et
au moins un décodeur FEC conçu pour décoder le flux de données multidiffusion IP codé FEC cumulatif avant la visualisation du contenu contenu dans le flux de données multidiffusion IP sur un dispositif de communication informatique associé audit moyen de transport.

4. Système selon la revendication 3, dans lequel le réseau de stations de base est conçu en outre pour numériser le contenu de données visuelles reçu à partir d'un fournisseur de contenu ; et filtrer les données visuelles pour désentrelacer les données visuelles et supprimer les artefacts et parasites.

5. Système selon la revendication 3, dans lequel le dispositif de communication informatique comprend un de l'au moins un décodeur FEC de telle sorte que le flux de données multidiffusion IP codé FEC est décodé après la distribution au dispositif de communication informatique.

6. Procédé destiné à fournir des données transmises en continu durant une multidiffusion IP à un passager d'un moyen de transport selon la revendication 1, ledit procédé comprenant en outre les étapes consistant à :
recevoir le contenu de données au niveau d'un réseau de stations de base (14) :
formater le contenu de données reçu en un flux de données multidiffusion IP ;
coder (122) le flux de données multidiffusion IP en utilisant un codeur FEC compris dans le réseau de stations de base ;
communiquer (108) le flux de données multidiffusion IP codé FEC du réseau de stations de base à un système de communication du moyen de transport (26) comprenant un LAN (46) ;
distribuer le flux de données multidiffusion IP à au moins un dispositif de communication informatique (50) en utilisant le LAN ; et
afficher le contenu de données du flux de données multidiffusion IP sur le dispositif de communication informatique.

7. Procédé selon la revendication 6, dans lequel le codage du FEC comprend les étapes consistant à :
recevoir le flux de données multidiffusion IP au niveau du système de communication du moyen de transport (26) ;
appliquer FEC au flux de données multidiffusion IP en utilisant un codeur FEC (54) compris dans le système de communication du moyen de transport ; et
distribuer le flux de données multidiffusion IP codé FEC au dispositif de communication informatique.

8. Procédé selon la revendication 7, dans lequel le décodage du flux de données multidiffusion IP codé FEC cumulatif comprend les étapes consistant à :
recevoir le flux de données multidiffusion IP codé FEC au niveau du dispositif de communication informatique (50) ; et
décoder (126) le flux de données multidiffusion IP codé FEC au niveau du dispositif de communication informatique en utilisant un décodeur compris dans le dispositif de communication informatique.

9. Procédé selon la revendication 6, dans lequel la distribution du flux de données multidiffusion IP à au moins un dispositif de communication informatique (50) comprend la distribution sans fil du flux de données multidiffusion IP au dispositif de communication informatique via un LAN sans fil du moyen de transport (46).
